# EUROPEAN PATENT APPLICATION

(11) **EP 0 773 494 A1**
(43) Date of publication of application: **14.05.1997**
(21) Application number: 96118026.2
(22) Date of filing: 11.11.1996
(51) Int. Cl.: G06F 3/023, G06K 11/18

(54) **Motion responsive cursor for controlling movement in a virtual image apparatus**

(30) Priority: 13.11.1995 US 557402
(71) Applicant: MOTOROLA, INC., Schaumburg, IL 60196 (US)
(72) Inventor: Carns, William E., Fountain Hills, Arizona 85268 (US); Jachimowicz, Karen E., Laveen, Arizona 85339 (US); Richard, Fred V., Scottsdale, Arizona 85260 (US); Kelly, George R., Gilbert, Arizona 85296 (US); Wildy, Marc H., Phoenix, Arizona 85044 (US); Rhyne, George W., Scottsdale, Arizona 85251 (US)
(74) Representative: Hudson, Peter David

(57) **Abstract**

Portable electronics equipment (30) having a virtual display (32) including display electronics (25 & 27) and optics (18) for providing a virtual image (50) in the display (32), cursor electronics (110) and motion microsensors (112) connected to the display electronics (25 & 27) for producing a motion responsive cursor (53) in the virtual image (50) in the display (32) and image selection control switch (37) mounted on the portable electronics equipment (30) externally accessible to the operator. The motion microsensor (112) controls are connected to the cursor electronics (110) for controlling the position and function of the cursor (53) in the virtual image (50) to provide functions such as pull-down menus (51) and image selection.

## Description

### Field of the Invention

The present invention pertains to the generation of virtual images in portable electronics equipment and more specifically to user interface with generated virtual images in portable electronics equipment.

### Background of the Invention

Portable electronics equipment, such as radios, cellular and cordless telephones, pagers and the like, are becoming increasingly popular. In many instances it is desirable to provide apparatus on the equipment to supply the operator with visual messages that include graphics and printed information. The problem is that prior art apparatus providing these functions require relatively high electrical power and require a great amount of area to be sufficiently large to produce useful and visually perceivable information.

In the prior art, for example, it is common to provide visual apparatus utilizing liquid crystals, directly viewed light emitting diodes, etc. These produce very large and cumbersome displays that greatly increase the size of the receiver and require relatively large amounts of power.

In one instance, the prior art includes a scanning mirror to produce a visually perceivable image but again this requires relatively large amounts of power and is very complicated and sensitive to shock. Also, the scanning mirror causes vibration in the unit which can be felt by the user, reducing comfort and acceptability.

Apparatus incorporating a miniature virtual image, which solves most of the problems mentioned above, is disclosed, for example, in U.S. Patent No. 5,224,198, entitled "WAVEGUIDE VIRTUAL IMAGE DISPLAY", issued June 29, 1993. Typically, the products in which the miniature virtual image display is incorporated are small hand held devices. Many of the proposed applications would benefit from some user interface with the display.

Typically, in portable electronics equipment, such as radios, cellular and cordless telephones, pagers and the like, numbers to be dialed or functions to be programmed into the receiver are input by way of a manual keyboard sometimes accompanied by a small display which illustrates the number being dialed or the function being programmed. Because of finger size and visual perception, the keyboard and its display are often the limiting factor in determining the size of the receiver. Further, the keyboard and direct view display require considerable volume for buttons (and space for movement), display module and associated electronics.

Accordingly, it is a purpose of the present invention to provide for two-way interaction between a user and a virtual image apparatus.

It is a further purpose of the present invention to provide a new and improved motion responsive cursor for permitting user interface in a virtual image.

It is a further purpose of the present invention to provide a new and improved motion responsive cursor in a virtual image for use in small hand held devices and which is controllable through the exertion of directional movement on the device by the operator holding the device.

It is a still further purpose of the present invention to provide a new and improved motion responsive cursor in a virtual image, which includes motion microsensors that are substantially smaller than any prior art interactive devices such as keyboards, trackballs, mice, pens, chording keyboards, joystick, etc., and which does not impose a size limitation on associated equipment and responds to the exertion of directional movement of the device along at least one axis, thus translating to corresponding directional movement of the cursor.

### Summary of the Invention

The above problems and others are at least partially solved and the above purposes and others are realized in portable electronics equipment having a virtual image display including display electronics and optics for providing a virtual image in the display and cursor electronics connected to the display electronics for producing a motion responsive cursor in the virtual image display, continuously alterable in accordance with directional movement of the portable electronics equipment along at least one axis. Motion microsensors, connected to the cursor electronics for controlling the position of the cursor in the virtual image, are mounted within the portable electronics equipment and responsive to directional motion exerted by the user to provide user interface through the use of image interaction functions such as pull-down menus and image selection.

### Brief Description of the Drawings

Referring to the drawings:
FIG. 1 is a simplified schematic view of a compact virtual image display apparatus embodying the present invention;
FIG. 2 is a simplified block diagram of electronics associated with the compact virtual image display apparatus of FIG. 1;
FIG. 3 is an enlarged view in top plan of an LED array, portions thereof broken away, forming a portion of the electronics of FIG. 2;
FIG. 4 is a perspective view of portable communication equipment embodying the present invention;
FIG. 5 is a simplified sectional view of the compact virtual image display apparatus as seen from the line 5-5 of FIG. 4;
FIG. 6 is a typical view as seen by the operator of the portable communication receiver of FIG 4 showing movement of the cursor through multi-directional movement of the receiver;
FIG. 7 is a side view of an embodiment of a waveguide virtual image display apparatus;
FIG. 8 is a simplified block diagram of a direct retinal scan type of virtual image display apparatus;
FIG. 9 is a block diagram of electronics for communication equipment embodying the present invention;
FIG. 10 is a schematic block diagram of the method for movement of the cursor in the virtual image, embodying the present invention; and
FIG. 11 is a sectional view of the image selection control switch of the present invention.

### Description of the Preferred Embodiments

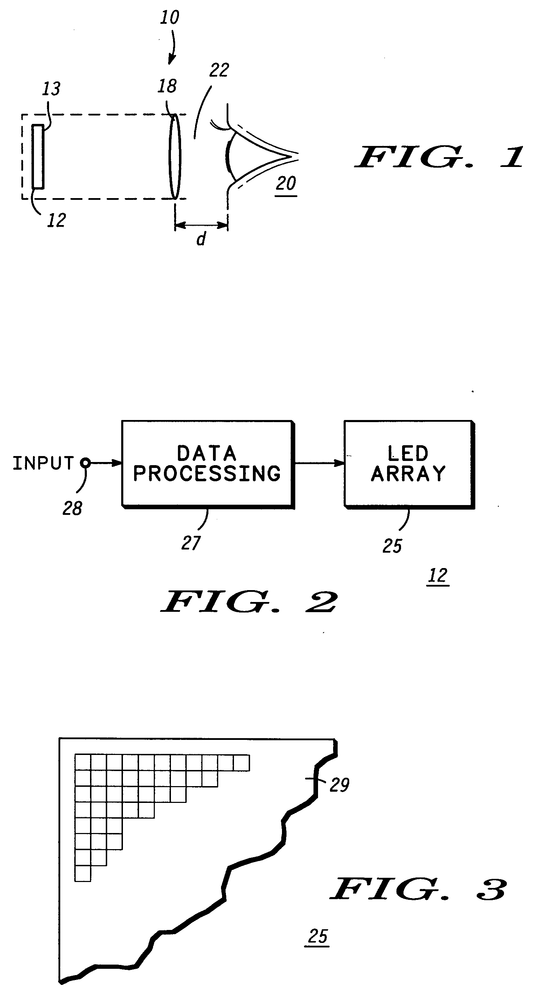

Referring specifically to FIG. 1, an example of a compact virtual image display 10 is illustrated in a simplified schematic view. Display 10 includes apparatus 12 for providing an image on a surface 13. An optical system, represented by lens 18, is positioned in spaced relation to surface 13 of apparatus 12 and produces a virtual image viewable by an eye 20 spaced from an aperture 22 defined by lens 18.

Apparatus 12 is illustrated in more detail in FIG. 2 and includes, for example, semiconductor electronics such as a light emitting device (LED) array 25 driven by data processing circuits 27. Data processing circuits 27 include, for example, logic and switching circuit arrays for controlling each LED in LED array 25. Data processing circuits 27 include, in addition to or instead of the logic and switching arrays, a microprocessor or similar circuitry for processing input signals to produce a desired image on a device such as LED array 25. It will be understood that data processing circuits 27 and LED array 25, while illustrated separately for purposes of this description, could be formed on the same semiconductor chip in some applications.

In this specific embodiment LED array 25 is utilized because of the extremely small size that can be achieved and because of the simplicity of construction and operation. It will of course be understood that other image generating devices may be utilized, including but not limited to lasers, LCDs, CRTs, etc. Referring specifically to FIG. 3, a plan view of LED array 25 is illustrated in which the LEDs are formed in a regular pattern of rows and columns on a single semiconductor chip 29. Portions of chip 29 are broken away to simplify the drawing but it should be understood that many of the other circuits to be described herein could be included on the same chip. By addressing specific LEDs by row and column in a well known manner, the specific LEDs are energized to produce an image. Digital or analog data is received at input terminal 28 and converted by data processing circuits 27 into signals capable of energizing selected LEDs to generate the predetermined image.

It will be understood by those skilled in the art that LED array 25 and semiconductor chip 29 are greatly enlarged in the figures. The actual size of semiconductor chip 29 is on the order of a few milli-meters along each side, with he light emitting area or array being generally in the range of 2 to 50 milli-meters and preferably 5 to 10 milli-meters, with each LED being less than 20 microns on each side and preferably on the order of as little as one micron on a side. It should be understood that the actual light emitting device array is much smaller, because bonding pads, etc. add several milli-meters of area on each side. Generally, the larger size chips simply mean that more light emitting devices are used in the array to provide more definition, color, etc. As the semiconductor technology reduces the size of the chip, greater magnification and smaller lens systems are required. Reducing the size of the lenses while increasing the magnification results in greatly limiting the field of view, substantially reducing eye relief and reducing the working distance of the lens system.

The lens system, represented schematically by lens 18, is mounted in spaced relation from surface 13 of apparatus 12 so as to receive the image from surface 13, magnify it a predetermined amount and create the aperture within which the virtual image is viewed. In the present embodiment, lens 18 magnifies the image fifteen times (15x) so that the image from LED array 25 is magnified fifteen times its original angular size. Generally, a magnification of at least ten is required to magnify the real image sufficiently to be perceived by a human eye. It will of course be understood that the lens system may be adjustable for focus and additional magnification, if desired, or may be fixed in a housing for simplicity.

Eye relief is the distance that eye 20 can be positioned from lens system 18 (the viewing aperture) and still properly view the image, which distance is denoted by "d" in FIG. 1. Because of the size of lens 18, eye relief, or the distance d, is sufficient to provide comfortable viewing and in the present embodiment is great enough to allow a viewer to wear normal eyeglasses, if desired.

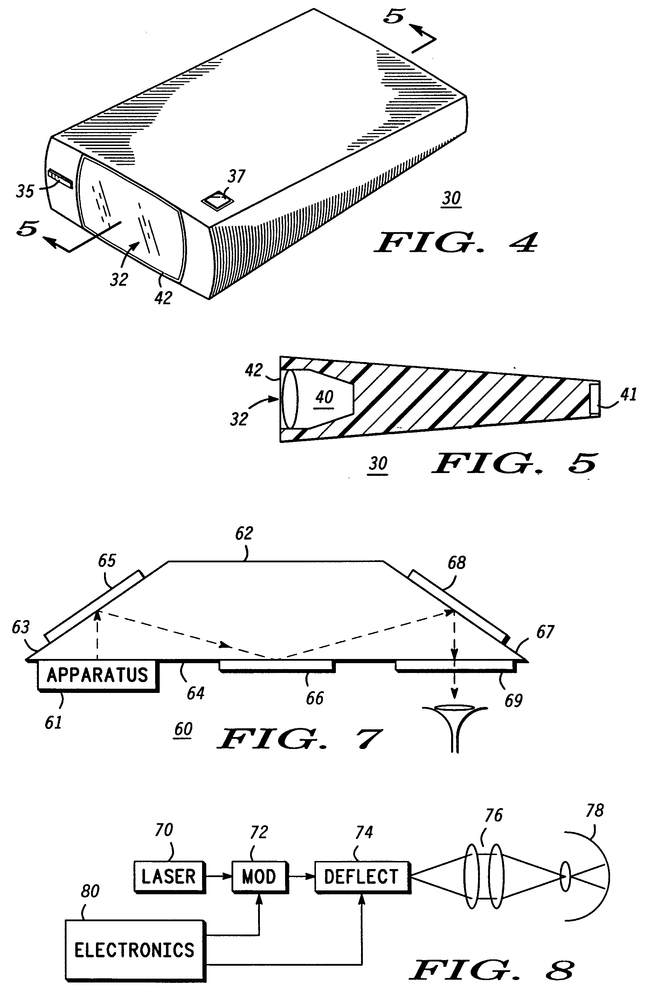

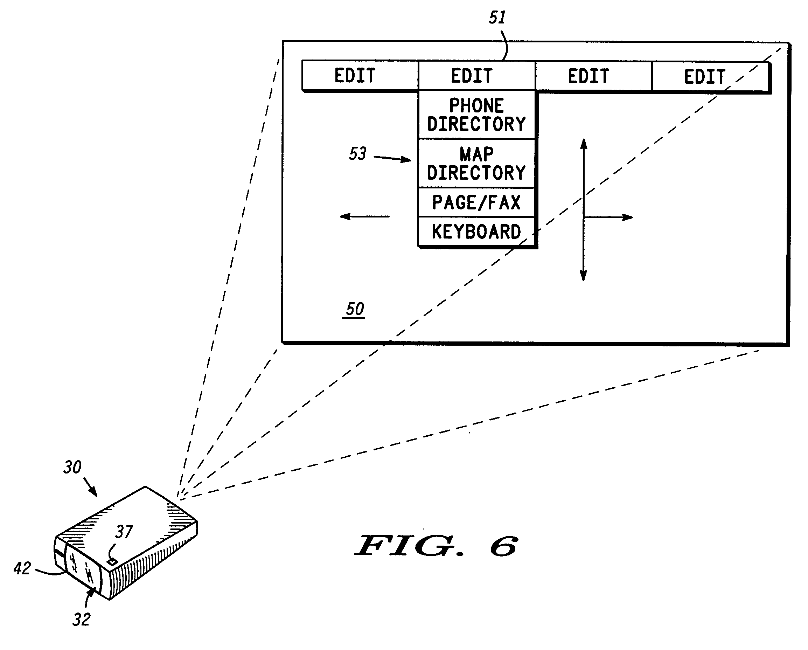

FIG. 4, illustrates portable electronics equipment 30. It will of course be understood that portable electronics equipment 30 can be any of the well known portable devices, such as a cellular or cordless telephone, a two-way radio, a pager, a data bank, etc. Portable electronics equipment 30 includes an ON/OFF or power switch 35 and an image selection control switch 37 positioned on the exterior of equipment 30.

The ON/OFF or power switch 35 is provided so that an operator of portable electronics equipment 30 can provide power to the electronics equipment, including a motion responsive cursor, thereby controlling the cursor in the virtual image being viewed. Cursor electronics provide an image of the cursor, continuously alterable, either positioned at a selected spot or moving toward a selected spot. In addition, the cursor electronics include a motion sensitive micromachined chip for controlling the motion of the cursor in the virtual image. There is provided image selection control switch 37 in electronic cooperation with the cursor electronics which controls the selection of a chosen function/image, thereby allowing the user to select the image or pull-down menu. It is anticipated that the motion sensitive chip can be, for example, any of the motion sensing type of microsensors presently commercially available on the market.

Three preferred embodiments of a microsensor are disclosed herein, namely a tip/tilt, rotational sensitive sensor such as a multi-axes, suspended mass gyroscope, a linear acceleration sensitive sensor, having linear sensitivity to up/down/right/left movement, such as an accelerometer microsensor, or a charge-coupled device (CCD) sensor, such as a silicon photodiode CCD microsensor, charge injection device (CID) sensor, position sensing detector (PSD), or other optical device responsive to motion of equipment 30 in relation to a fixed baseline parameter. The use of such motion microsensors is desired due to their small packaging, low volume and low power consumption. In addition, the use of motion microsensors is desirable due to the relatively insensitive nature of the device imagery to movement of the portable electronics equipment. Sufficient multi-axis directional movement can be exerted upon the device to be sensed and drive the cursor without affecting the virtual image. It should, however, be understood that many different types of motion microsensors, beyond those previously mentioned, may be utilized.

In general, the motion microsensor includes means for providing a control signal continuously alterable in accordance with the sensed directional movement of the portable electronics equipment and responsive to a rotational and/or linear movement, such as a tip/tilt, up/down/right/left movement, or by tracking the directional movement of the device from an original baseline position.

Portable electronics equipment 30 is designed to be held by an operator with one hand. The cursor electronics are mounted in the hand held electronic device and connected to the display electronics for producing a motion responsive cursor in the virtual image display. The ON/OFF or power switch 35 is located on the exterior of equipment 30, thereby allowing the user to power on or off the equipment as necessary. Other means of activating and deactivating power to portable electronics equipment 30 are anticipated by this disclosure. Once the power to portable electronics equipment 30 is activated, movement of equipment 30 is translated into movement of the cursor in the virtual image display. The image selection control switch 37 is positioned on portable electronics equipment 30 so as to be operated with a digit, such as a finger or thumb, of the hand holding portable electronics equipment 30. The operator views the virtual image through a viewing aperture 42, positions the cursor in the desired location by directionally moving portable electronics equipment 30 in relation to the desired movement of the cursor, such as a tip/tilt rotational motion or an up/down/left/right lineal motion, dependent on the type of microsensor utilized, and selects the desired function/image through image selection control switch 37 with a single hand. Other means of sending an image selection signal are anticipated by this disclosure. It is further anticipated that there can be located within the housing of portable electronic equipment 30, a voice pickup, thus allowing the operator to communicate with other individuals remote from his location.

Referring to FIG. 5, a simplified sectional view of portable electronics equipment 30, as seen from the line 5-5, is illustrated. Miniature virtual display 32 includes image generation apparatus 41 for providing a real image to a fixed optical system 40, which in turn produces a virtual image viewable by the operator through viewing aperture 42. Fixed optical system 40 is constructed to magnify the entire real image from image generation apparatus 41, without utilizing moving parts, so that the virtual image viewable through aperture 42 is a complete frame, or picture, which appears to be very large and is easily discernible by the operator. By producing a magnified virtual image from the very small real image of apparatus 41, fixed optical system 40 is relatively small and adds virtually no additional space requirements to portable electronics equipment 30. Optical system 40 is constructed with no moving parts, other than optional features such as focusing, zoom lenses, etc. Further, apparatus 41 requires very little electrical power to generate the real image and, therefore, adds very little to the power requirements of portable electronics receiver 30.

Referring to FIG. 6, there is shown a typical view as seen by the operator through viewing aperture 42 of miniature virtual display 32 of portable electronics equipment 30 of FIG. 4, utilizing an accelerometer microsensor to measure linear acceleration. There is depicted through the use of linear directional arrows (for illustrational purposes only), cursor positioning through multi-directional movement of equipment 30. Virtual image 50, as seen through viewing aperture 42, is shown with an included feature of a pull-down menu 51, which is actuated to the pull-down position by directional movement of equipment 30, translating to corresponding movement of a cursor 53 in the virtual image and selection of the desired function/image through operation of image selection control switch 37. In this particular example, pull-down menu 51 has been selected by moving in a linear direction, portable electronics equipment 30, in the desired direction of movement for the cursor 53 in the virtual image. This directional movement translates into movement of cursor 53 in generally the same direction. The directional movement of the motion controlled cursor 53 on the pull-down selection name for pull-down menu 51, enables the operator to select the desired function/image by activating the image selection control switch 37. It is anticipated that a plurality of different pull-down menus, dependent on the specific field of use of equipment 30, will be provided and which can be selected by movement of the portable electronics equipment 30, thus translating into directional movement of cursor 53 in the virtual image and selection of the desired title by activating image selection control switch 37.

Pull-down menu 51 may include a variety of functions, or information selections as illustrated in FIG. 6. In this specific example, pull-down menu 51 includes a map directory, which may include statistical map information stored in memory by a base station. Pull-down menu 51 further includes a choice of PAGE/FAX information, which might include, for example, pages or fax messages received by portable electronics equipment 30 and stored in memory. Many other forms of graphical and/or alpha-numeric information might be available to the operator and easily selected by the operator through control of cursor 53 in the virtual image, by directional movement of the portable electronics equipment 30. Generally, this directional movement produces a small analog voltage proportional to the parameter being sensed, which is integrated over a selected interval, representative of the magnitude of the input voltage, thus submitting a signal which translates into corresponding directional movement of cursor 53 in the virtual image and subsequent selection through image selection control switch 37.

In addition, it is anticipated that there may be incorporated a keyboard function on pull-down menu 51 and selection of this function provides a virtual image in aperture 42 of miniature virtual display 32 of a keyboard. The function KEYBOARD replaces the need for a physically large and cumbersome keyboard or control panel on portable electronics equipment 30. Because the keyboard has been eliminated on portable electronics equipment 30, it can be designed with greater flexibility with regard to its shape and size. Basically, the size and shape of portable electronics equipment 30 is no longer dependent upon the need to provide a manually operable keyboard in the housing. The selection of the keys on the keyboard is achieved through the directional movement of portable electronics equipment 30, corresponding to directional translation of cursor 53 in the virtual image, thereby enabling the operator to select specific keys on a keyboard image.

Referring specifically to FIG. 7, another embodiment of a virtual image display 60 is illustrated wherein apparatus 61 (generally similar to apparatus 12 of FIG. 1) is affixed to the inlet of a waveguide 62 for providing a real image thereto. Light rays from the real image at apparatus 61 are directed toward a predetermined area on a first side 63 where they are reflected back toward a second side 64 generally along an optical path defined by sides 63, 64 and 67. It is anticipated that the optical path defined by sides 63, 64 and 67 may in the alternative be of different configuration using a greater or lesser number of definitional sides. Three diffractive elements 65, 66 and 68 are affixed to sides 63, 64 and 67 at the next three predetermined areas, respectively, to which the reflected light rays are directed. Diffractive elements 65, 66 and 68 provide the required amount of chromatic and other aberration correction so that a virtual image of a desired size is viewable through a last refractive element 69 which defines the outlet of optical waveguide 62. Virtual image display 60, or a similar virtual image display, disclosed in U.S. Patent No. 5,224,198, entitled "WAVEGUIDE VIRTUAL IMAGE DISPLAY", issued June 29, 1993, could be utilized, for example, to replace miniature virtual image display 32 of FIG. 4.

FIG. 8 is a block diagram of a direct retinal scan display, which might also be utilized as the miniature image display to replace, for example, miniature virtual image display 32 of FIG. 4. A laser 70, which may be any of the well known lasers including solid state lasers, such as vertical cavity surface emitting lasers, diode lasers, diode-pumped lasers, etc., supplies a coherent light beam to a modulator 72. Modulator 72 impresses video information onto the light beam generally by modulating the intensity of the light beam as, for example, by providing changes in the power level of laser 70. Depending upon the application, the modulation could be as simple as turning laser 70 off and on, which essentially translates into a digital system. Acousto-optic modulators are one of the preferred modulators for most applications, but other techniques, such as electro-optics and mechanical are completely feasible.

The modulated light beam from modulator 72 is directed to a deflection system 74. A lens system 76 is used to focus the light beam from deflection system 74 into an eye 78. The focal length of lens system 76 is chosen so that the scanning system focal point is within the pupil of eye 78 and the coherent beam focal point is at the retina of eye 78.

Timing and control of modulator 72 and deflection system 74 is provided by electronics 80. Electronics 80 includes a basic oscillator, or timer, which provides the timing signals to cause the sweeping and modulating to occur at the proper times. Also, electronics 80 provides video signals to modulator 72 to modulate the light beam to the correct intensity at the required times. Further, electronics 80 provides horizontal and vertical (orthogonal) deflection signals to cause deflection system 74 to periodically scan the light beam in a raster. Depending upon the application and the desired image resolution, the horizontal deflection frequency may be on the order of 15 to 30 kHz., the vertical deflection is no lower than 60 Hz., and the modulating frequency may be on the order of 12 MHz.

The purpose of deflection system 74 is to scan the modulated light beam on the retina of eye 78, or "write" an image on the retina. There are many possible configurations for deflection system 74 and lens system 76, depending upon the application of the display and how it is desired to form the image in eye 78. Additional information on this type of display is available in a copending U.S. patent application entitled "DIRECT RETINAL SCAN DISPLAY", serial no. 08/292,193, filed August 18, 1994, assigned to the same assignee, which is a file wrapper continuation of U.S. patent application entitled *"*DIRECT RETINAL SCAN DISPLAY*"*, serial no. 07/857,193, filed March 24, 1992. While the direct retinal scan display does not technically generate a virtual image, the direct retinal scan display is included in the definition of a virtual display apparatus for purposes of this disclosure because of the similarity thereto.

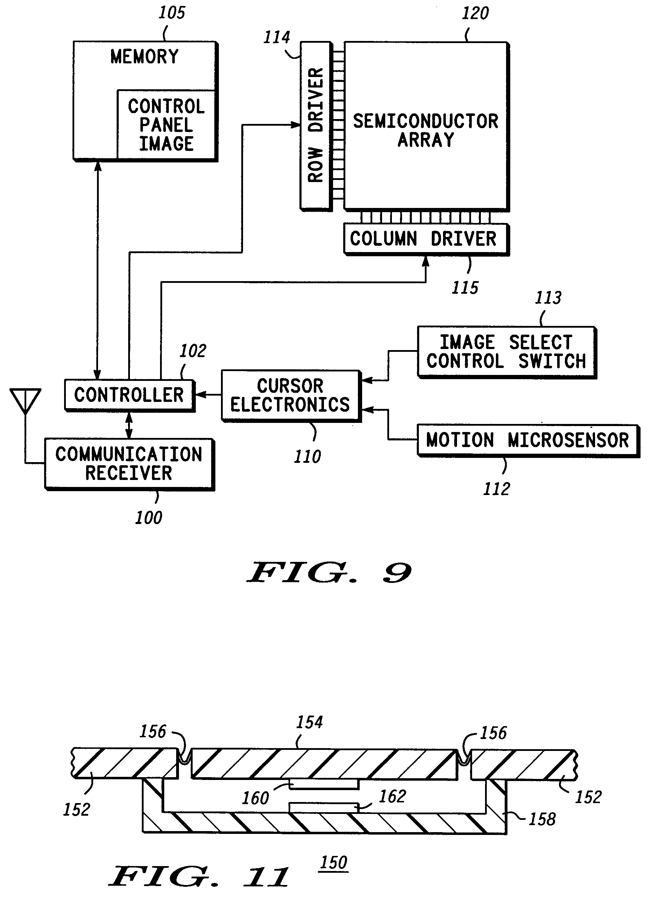

Referring specifically to FIG. 9, a block diagram of the electronics for communication or other equipment embodying the present invention is illustrated. A communication receiver 100 can be any of the well known portable receivers, such as a cellular or cordless telephone, a two-way radio, a pager, etc. Receiver 100 has a data output connected to a controller 102 which may be a microprocessor, a DSP, a gate array, specially designed logic circuits, etc. A memory 105 is connected to controller 102 and stores information and messages, graphic and/or alpha-numeric, received by receiver 100 in accordance with the programming of controller 102. Cursor electronics 110, driven by motion microsensor 112 and an image selection control switch 113, are also connected to an input or inputs of controller 102.

Controller 102 receives video data from memory 105 and cursor electronics 110 and supplies the video data to row and column drivers 114 and 115, respectively, which in turn activate specific light generating devices in a semiconductor array 120 to produce the desired picture or frame of information. In a specific example, timing signals are supplied to row drivers 114 to supply an activating potential to each complete row, one at a time, and in a periodic sequence from the first row at the top to the last row at the bottom. Simultaneously a complete row of video data is placed in column drivers 115, which generally include a latching function, and the data is supplied to the row of devices receiving the activating potential from the row drivers 114. When the second row is activated by row drivers 114, a new row of data is switched into array 120 from column drivers 115. In this fashion a complete real image is generated with the definition and quality depending upon the number of devices included in array 120. Generally, it is desirable to include in the range of 500 to 1500 pixels by 500 to 1500 pixels with each pixel including at least one light emitting device, for purposes of color and/or redundancy.

Motion microsensors of varying types, are anticipated by this disclosure, including multi-axes, suspended mass gyroscope microsensors, accelerometer type microsensors or photodiode CCD camera microsensors. Disclosed is an embodiment of a multi-axes suspended mass gyroscope microsensor such as that disclosed in U.S. Patent No., 5,329,815, entitled *"*VIBRATION MONOLITHIC GYROSCOPE*"*, issued July 19, 1994, having a central mounting post and a seismic mass element affixed thereto for measurement of vibrational movement and being formed by semiconductor processing techniques. Alternative suspended mass gyroscope microsensors are anticipated by this disclosure, such as those disclosed in U.S. Patent No. 5,359,893, entitled *"*MULTI-AXES GYROSCOPE*"*, issued November 1, 1994, which discloses a multi-directional micromechanical gyroscope, capable of sensing movement about more than one axis and U.S. Patent No. 5,377, 544, entitled *"*ROTATIONAL VIBRATION GYROSCOPE*"*, issued January 3, 1995, which discloses a rotor affixed to a central mounting post by helical springs, thereby capable of measuring rotary movement about the mounting post.

In application, the preferred embodiment of the gyroscope microsensor is disclosed as having a plurality of capacitor plates located about the perimeter of semiconductor substrate, and having corresponding capacitors located on a seismic mass element responsive to vibrational movement about a plurality of axes. The seismic mass element may be defined as a flat, generally rectangular layer of semiconductor material having a central opening and symmetrically positioned about a post. Each of the capacitor plates, and those located on the mass element, forms a capacitance with the corresponding plate. The sensed changed in capacitance is integrated into an analog voltage output which is further integrated to achieve a parameter representative signal, thereby sending a signal to the cursor electronics and controller, and driving the directional movement of the cursor in the virtual image. In the alternative, single plates positioned on the substrate can be utilized, forming a capacitance with the mass element. The push-pull arrangement of the capacitor plates, previously discussed, is preferred due to increased control and sensing capabilities of the microsensor using that configuration. The gyroscope microsensor is mounted within a rigid support structure, yet maintains small size and volume. In operation, the vibrational movement of portable electronics equipment 30 allows for a measurable change in the capacitance at some specific point, which is sensed and converted to a signal, representative of the directional movement. As stated, this signal drives the movement of the cursor in the virtual image, corresponding to the directional signal output by the sensing of the movement of portable electronics equipment 30. The signal produced by the change in capacitance is coupled to an address generator (e.g., circuitry including counters, a pair of low frequency oscillators, etc.) that is controllable to provide higher and lower row and column addresses. Thus by moving the portable electronics equipment 30 in a chosen directional movement, a change in capacitance at a specific location generates a signal (changing addresses) to move the cursor in the virtual image in the desired direction.

It is alternatively, disclosed to utilize an accelerometer microsensor capable of sensing and measuring acceleration upon equipment 30 using a capacitive measurement scheme. It is disclosed to preferably use a micromachined sensor with signal conditioning and signal processing circuitry. In use, the accelerometer produces a small analog voltage proportional to the acceleration sensed. This analog voltage is integrated over a selected interval and a representative signal is transmitted to the cursor electronics and controller. A silicon micromachined accelerometer for measurement of linear acceleration is anticipated, being produced as a single chip having a memory interface which cooperates with the cursor electronics and controller. An embodiment of a multi-axes accelerometer such as that anticipated for use is disclosed in U.S. patent application entitled *"*THREE AXES ACCELEROMETER*"*, serial no. 08/274,128, filed July 12, 1994. In application, the movement of equipment 30 in an up/down/right/left direction produces acceleration which is sensed by the sensing means. A signal is sent to the cursor electronics representing the linear acceleration for processing by an internal circuit means or sensor processor. It is disclosed to use an accelerometer formed by bulk micromachining techniques, utilizing semiconductor materials. In use, there are formed conductive plates, generally mounted on a substrate, thereby forming one or more capacitances capable of measuring acceleration along a plurality of mutually orthogonal axes. As disclosed in the above cited application, there exist a pair of fixed plates with a third plate movably mounted therebetween for sensing acceleration along a first axis through all three plates. Two of the plates have fingers extending outwardly, in two axes perpendicular to each other and to the first axes. The plurality of plates and fingers form capacitances therebetween which are used to produce signals indicative of acceleration along a plurality of axes.

Lastly, it is disclosed to incorporate a camera microsensor such as a photodiode charge couple device camera, more commonly known as a CCD camera microsensor, capable of detecting a change in the lineal movement of the equipment 30 from an original baseline parameter. This type of optical imaging sensor consists of an integrated circuit comprised of an array of photosensor sites that convert incident photons into an electrical charge, proportional to the amount of photons absorbed. By directionally moving device 30 in relation to a baseline image parameter, the optical sensor detects the baseline change and submits a signal to alter the specific address of the cursor in the virtual image.

Irrespective of the type of motion based microsensor utilized, once the operator has adjusted the cursor in the virtual image to the chosen location, image selection control switch 113 (as shown in FIG. 9) is activated by the user to control the function or pull-down function by submitting a signal to the cursor electronics 110. Cursor electronics 110 actually provide control signals to controller 102 which are converted into the form of (or are in the form of) timing and data signals so that a cursor appears in the real image generated by array 120. The cursor image may utilize anywhere from one to several adjacent pixels, depending upon the shape and size desired, and as the directional movement of portable electronics equipment is detected by motion microsensor 112 and image selection control switch 113 is operated, the specific function/image of the cursor is actuated by simply sending the addresses of different rows and columns from cursor electronics 110 to controller 102. The row and column address signals are supplied to controller 102 which applies the signals as row and column video signals to the row and column drivers 114 and 115 to provide an image of the cursor either positioned at a selected spot or moving toward a selected spot. It will be understood by those skilled in the art that the image of the cursor is simply an indicator for the convenience and user interface of the operator and the actual selection of the video to be illustrated is accomplished by supplying the address signals to memory 105 through controller 102.

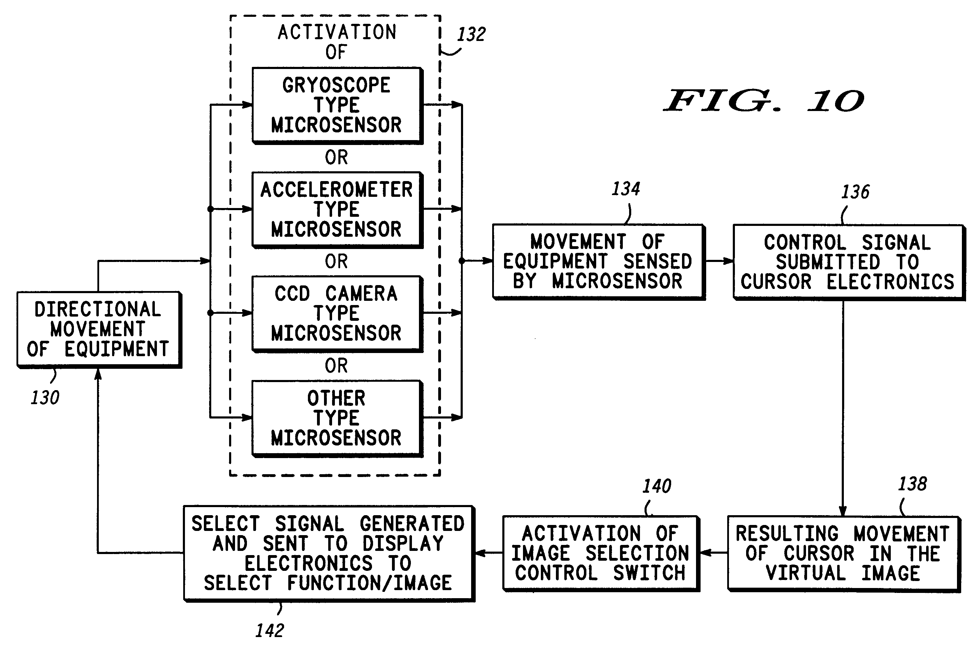

FIG. 10 illustrates in schematic block diagram, the method for movement of the cursor in the virtual image of equipment 30. During user interface, the user moves the equipment 30 in the desired directional movement of the cursor in the virtual image. There is depicted, directional movement 130 of the equipment , which activates 132 the specific type of microsensor used, being comprised of at least one gyroscope, accelerometer, CCD camera or other type of available microsensor capable of sensing directional movement. This directional movement 130 is sensed 134 by the microsensor dependent on specific defined parameters of the microsensor. A control signal is submitted 136 in response to the sensed directional movement from the microsensor to the cursor electronics and address generator which results in movement of the cursor in the virtual image 138 to the chosen location. The user then activates the image selection control switch 140, which sends a select signal 142 to the display electronics, to select the chosen function or image. If further desired movement of the cursor in the virtual image is desired, the user repeats the preceding method.

Referring to FIG. 11, a sectional view of a switch which may be used as image selection control switch 37 (see FIG. 4) is shown. The image selection control switch is designated 150 herein. Image selection control switch 150 can be of various configurations, generally either protruding from the apparatus or flush mounted. It is anticipated by this disclosure that alternative configurations of image selection control switch 150 may be utilized. Shown in FIG. 11 is image selection control switch 150 being flush mounted within the housing 152 of the apparatus. Image selection control switch 150 includes a finger button 154 mounted in close tolerance within an opening 156 in housing 152 of the portable electronics equipment by means of support structure 158. There is affixed to finger button 154 and housing 152 means for preventing dust, moisture, etc. from entering housing 152 and affecting circuits and other components. There is provided an electrical contact 160 mounted on the underside of button 154 and a corresponding electrical contact 162 mounted on support structure 158. When button 154 is depressed down electrical contacts 160 and 162 come into electrical contact, thus completing a circuit and thereby submitting a signal to controller 102 (FIG. 9). In this situation a signal is supplied to controller 102 which is generally used, for example, to select a particular portion of memory 105 being addressed at that time.

In operation, display 32 (see FIG. 4) is either turned on with a separate switch (not shown), or is connected to turn on with electronics equipment 30 through power switch 35. The equipment 30 is rotated or directionally moved in a specific direction, dependent on the specific type of microsensor utilized, and a signal is submitted to the cursor controller 102, translating to generally similar directional movement of the cursor. Image selection control switch 37 is then depressed allowing the electrical contacts to be electrically closed to actuate the cursor at a desired location. By depressing image selection control switch 37, a "select" signal is sent to controller 102 and pull-down menu 51 (see FIG. 6) appears. Equipment 30 is then directionally moved in translation to the desired movement of the cursor to a desired title on pull-down menu 51.

In FIG. 6, as an example, the title *"*MAP DIRECTORY*"* has been chosen. Image selection control switch 37 is then depressed straight down to provide a "select" signal to controller 102 to select the stored video information for MAP DIRECTORY 53. The row and column address signals supplied to controller 102 are also supplied to memory 105 and when the "select" signal is supplied to controller 102 the addressed portion of memory 105 is selected to be applied as video to row and column drivers 114 and 115, in this example virtual image 50 or the video illustrating MAP DIRECTORY 53.

Accordingly, a new and improved motion responsive cursor in a virtual image is disclosed. The new and improved motion responsive cursor in a virtual image is designed for use in small hand held electronic devices and is situated so as to be controllable with the hand holding the device. While specific motion microsensors have been disclosed, it will be understood by those skilled in the art that other controls and/or microsensors, incorporating existing technologies, such as resistive methods, capacitive methods or acoustic wave methods can be utilized. Thus, a cursor driven by a microsensor for interaction with a virtual display apparatus is disclosed which is small and easy to operate so that it can be incorporated into very small electronic equipment, such as radios, cellular and cordless telephones, pagers, data banks and the like.

While we have shown and described specific embodiments of the present invention, further modifications and improvements will occur to those skilled in the art. We desire it to be understood, therefore, that this invention is not limited to the particular forms shown and we intend in the appended claims to cover all modifications that do not depart from the spirit and scope of this invention.

## Claims

1. Portable electronics equipment with motion responsive cursor comprising:
a hand held electronic device (30);
a virtual display apparatus (10) for providing a magnified perceivable virtual image (50) of a complete frame of alphagraphics in the virtual display apparatus (10), the virtual display apparatus (10) being mounted in the hand held electronic device (30) for viewing of the magnified perceivable virtual image (50) by an operator;
cursor electronics (110) mounted in the hand held electronic device (30) for producing a motion responsive cursor (53) in a virtual display (32);
at least one motion microsensor (112) mounted within the hand held electronic device (30) to detect movement in a coordinate direction and being connected to the cursor electronics (110) for controlling the position of the motion responsive cursor (53) within the magnified perceivable virtual image (50); and
an image selection control switch (37) mounted on the hand held electronic device (30), being connected to the cursor electronics (110) for selecting a function of the cursor (53) in the virtual image (50) once the cursor (53) is directionally positioned within the magnified perceivable virtual image (50).

2. Portable electronics equipment as claimed in Claim 1, wherein the virtual display (32) includes a plurality of pixels formed on a single substrate (29) in an array (25) arranged in rows and columns with each row including in the range of 50 to 1500 pixels and each column including in the range of 50 to 1500 pixels, each of the plurality of pixels including at least one light emitting diode and the array (25) providing a very small real image, including optics (18) with components to magnify the real image at least ten times into a virtual image (50) such that the complete frame of alphagraphics can be perceived by a human eye (20).

3. Portable electronics equipment as claimed in Claim 1, wherein the motion microsensor (112) is a gyroscope.

4. Portable electronics equipment as claimed in Claim 1, wherein the motion microsensor (112) is an accelerometer

5. Portable electronics equipment as claimed in Claim 1, wherein the motion microsensor (112) is a charge couple device (CCD) camera.

6. Portable electronics equipment as claimed in Claim 5, wherein the charge couple device (CCD) camera converts incident photons into an electrical charge, proportional to the sensed movement of the portable electronics equipment (30), thereafter submitting an analog signal to a cursor controller (102), in proportion to the motion being sensed.

7. Portable electronics equipment as claimed in Claim 1, wherein the microsensor (112) includes means for providing a control signal continuously alterable in accordance with the sensed directional movement by the microsensor (112).

8. Portable electronics equipment as claimed in Claim 1, wherein the image selection control switch (37) is mounted on the hand held electronic device (30) and includes means for providing an image selection control signal.

9. Portable electronics equipment as claimed in Claim 8, wherein the hand held electronic device (30) is designed to be held by the operator with one hand and the image selection control switch (37) is positioned on the hand held electronic device (30) so as to be operated with a finger of the one hand.

10. The method for moving a cursor in portable electronics equipment comprising the steps of:
viewing a virtual image display (32) in the portable electronics equipment (30) through a viewing aperture (42), wherein the virtual image display (32) is comprised of display electronics having a two-dimensional array (25) of pixels with each pixel including at least one light emitting device and driving electronics connected to the array (25) for providing a real image of a complete frame of alphagraphics, cursor electronics (110) connected to an image generation apparatus (12) for producing a motion responsive cursor (53) in a virtual image (50), at least one motion microsensor (112) connected to the cursor electronics (110) for controlling the position of the cursor (53) in the virtual image (50), an image selection control switch (37) electrically connected to the cursor electronics (110) for controlling the selection and function of the cursor (53) and an optical system (18) to receive the real image and the cursor image (53) at the viewing aperture (42);
moving the portable electronics equipment (30) about at least one axis to position the cursor (53) in a chosen location and thereby activating the at least one motion microsensor (112);
sensing of the movement of the portable electronics equipment (30) by the motion microsensor (112), and thereby submitting a control signal to the cursor electronics (110) and an address generator;
moving the cursor (53) in the virtual image (50) to a chosen image in response to the control signal; and
activating the image selection control switch (37), thereby sending a select signal to display electronics (25 & 27) to select a chosen function or image.
